# EUROPÄISCHE PATENTANMELDUNG

(11) **EP 1 510 411 A1**
(43) Veröffentlichungstag der Anmeldung: **02.03.2005**
(21) Anmeldenummer: 04016452.7
(22) Anmeldetag: 13.07.2004
(51) Int. Cl.: B60R 19/18

(54) **Stossfänger für ein Kraftfahrzeug**

(30) Priorität: 29.08.2003 DE 10339949
(71) Anmelder: Euromotive Gesellschaft m.b.H. & Co. KG, 5651 Lend (AT)
(72) Erfinder: Garnweidner, Peter, 5112 Lamprechtshausen (AT); Danninger, Christian, 5204 Strasswalchen (AT)
(74) Vertreter: Pohlmann, Eckart, Dipl.-Phys.

(57) **Zusammenfassung**

Stoßfänger für ein Kraftfahrzeug mit einem Stoßfängerträger (1) und energieabsorbierenden Bauelementen, die zwischen dem Stoßfängerträger (1) und dem Rahmen des Kraftfahrzeuges angeordnet sind. Der Stoßfängerträger (1) besteht aus einem Hohlprofilteil mit quer zum Kraftfahrzeug verlaufender Profillängsachse, dessen Querschnittsform sechseckig ist und sich bei einem anliegenden Stoß verformt.

## Beschreibung

Die Erfindung betrifft einen Stoßfänger für ein Kraftfahrzeug mit einem Stoßfängerträger und energieabsorbierenden Bauelementen, die zwischen dem Stoßfängerträger und dem Rahmen des Kraftfahrzeuges angeordnet sind.

Wenn bei einem derartigen üblichen Stoßfänger die bei einem Stoß anliegende Stoßenergie die elastische Energieaufnahmekapazität des Stoßfängers überschreitet, biegt sich zwar der Stoßfängerträger in Längsrichtung des Kraftfahrzeuges durch, seine Querschnittsform bleibt jedoch im Wesentlichen erhalten. Das hat zur Folge, dass die Energieabsorption durch den Stoßfängerträger relativ gering ist und der größte Teil der Stoßenergie durch die energieabsorbierenden Baulemente aufgenommen werden muss.

Da weiterhin die Querschnittsform des Stoßfängerträgers im Wesentlichen unverformt erhalten bleibt, ist der in Längsrichtung des Kraftfahrzeuges zur Verfügung stehende Verformungsweg entsprechend verringert. Die Außenfläche des Stoßfängerträgers, die sich am nächsten zum Kraftfahrzeugrahmen und damit am nächsten zu dem dort vorgesehenen Kühler befindet, wird bei einem Stoß somit relativ stark in Richtung auf den Kühler verlagert, so dass sie frühzeitig damit in Berührung kommt. Der Anteil des Stoßfängerträgers an der Gesamtenergieabsorption beträgt daher nur maximal 15 %, der Rest der Energie muss von den energieabsorbierenden Bauelementen aufgenommen werden.

Um die Längsträger schadenfrei zu halten, werden aber Verformungswege von 150 bis 200 mm beim Typschaden benötigt, zu denen die Abmessung des Profilquerschnitts des Stoßfängerträgers von beispielsweise 60 bis 80 mm hinzukommen, die als Verformungsweg nicht verfügbar ist. Hinzu kommt der frühzeitige Schaden am Kühler.

Wenn zusätzlich für den Fußgängerschutz PU Schäume (ca. 60 mm) mit weicher Abstimmung zwischen dem Überzug des Stoßfängerträgers und dem Stoßfängerträger selbst angeordnet werden müssen, ist eine Schadenfreiheit des Längsträgers nur mit extrem verkürztem Längsträger realisierbar, was dann Probleme beim Gesamtaufbau des Fahrzeuges mit sich bringt.

Bei einem Aufprall mit hoher Geschwindigkeit tritt weiterhin das Problem auf, dass die Verbindung zwischen dem Stoßfängerträger und den Längsträgern des Rahmens des Kraftfahrzeuges über die energieabsorbierenden Bauelemente häufig verlorengeht, da sich die Rohre verbiegen und die Träger reißen. Probleme treten bei den bekannten Stoßfängern darüber hinaus bei einem Aufprall unter einem von 90° abweichenden Winkel auf, da sich die einzelnen Bauteile verbiegen und knicken.

Die der Erfindung zugrunde liegende Aufgabe besteht daher darin, einen Stoßfänger der eingangs genannten Art zu schaffen, der mit einer geringeren Baulänge in Längsrichtung des Kraftfahrzeuges verwirklicht werden kann.

Diese Aufgabe wird gemäß der Erfindung durch die Ausbildung gelöst, die im Anspruch 1 angegeben ist.

Bei dem erfindungsgemäßen Stoßfänger ist der Verformungsweg besser ausgenutzt, da die Querschnittsausdehnung des Stoßfängerträgers in Längsrichtung des Kraftfahrzeuges mitgenutzt werden kann. Der Grund dafür besteht darin, dass sich bei einem anliegenden Stoß die Querschnittsform des Stoßfängerträgers verformt und diese Verformung zur Energieaufnahme beiträgt. Die erfindungsgemäße Ausbildung hat weiterhin den Vorteil, dass die Verlagerung der Fläche des Stoßfängerträgers, die sich am nächsten zum Kühler befindet, geringer ist und infolge der Querschnittsverformung vor der Berührung des Kühlers mehr kinetische Energie in Verformungsenergie umgewandelt wird, so dass die Beschädigung des Kühlers später auftritt. Bei einem an der Rückseite angeordnetem Stoßfängerträger wird dementsprechend der Fahrzeugrohbau später beschädigt.

Durch die Bauraumreduzierung entsteht weiterhin Platz für den Fußgängerschutz.

Durch die erfindungsgemäße Ausbildung ist es möglich die Längsträger des Kraftfahrzeuges beim Typschaden selbst dann schadenfrei zu halten, wenn der Aufprall schräg erfolgt. Der Längsträgerverbund wird bei einem Aufprall mit hoher Geschwindigkeit erhalten und es ergibt sich ein möglichst konstantes Kraftniveau nahe am zulässigen Grenzwert.

Bei dem erfindungsgemäßen Stoßfänger übernimmt der Stoßfängerträger somit einen hohen Anteil an der Energieabsorption, der bei ca. 50 bis 60 % der insgesamt anliegenden Stoßenergie liegen kann. Für den Rest der Energieabsorption sorgen die energieabsorbierenden Bauelemente. Diese können daher sehr einfach ausgeführt sein, da der für sie geforderte Wirkungsgrad geringer ist. Das hat den Vorteil, dass auf die Seitenfestigkeit bei einem Aufprall mit hoher Geschwindigkeit mehr Rücksicht genommen werden kann.

Besonders bevorzugte Weiterbildungen und Ausgestaltungen des erfindungsgemäßen Stoßfängers sind Gegenstand der Patentansprüche 2 bis 14.

Im Folgenden werden anhand der zugehörigen Zeichnungen besonders bevorzugte Ausführungsbeispiele der Erfindung näher beschrieben.

Es zeigen
Fig. 1 eine Querschnittsansicht eines Stoßfängerträgers bei einem ersten Ausführungsbeispiel des erfindungsgemäßen Stoßfängers im unbelasteten Zustand,
Fig. 2 eine Fig. 1 entsprechende Querschnittsansicht des Stoßfängerträgers im verformten Zustand,
Fig. 3 eine Ansicht von oben auf ein zweites Ausführungsbeispiel des erfindungsgemäßen Stoßfängers,
Fig. 4 eine Querschnittsansicht des Stoßfängerträgers bei dem in Fig. 3 dargestellten Ausführungsbeispiel im unbelasteten Zustand,
Fig. 5 eine Fig. 4 entsprechende Ansicht des Stoßfängerträgers im verformten Zustand,
Fig. 6 in einer perspektivischen Ansicht ein weiteres Ausführungsbeispiel des erfindungsgemäßen Stoßfängers,
Fig. 7 in einer Querschnittsansicht ein energieabsorbierendes Bauelement bei dem in Fig. 6 dargestellten Stoßfänger im unbelasteten Zustand,
Fig. 8 in einer Fig. 7 entsprechenden Ansicht das energieabsorbierende Bauelement im verformten Zustand,
Fig. 9 eine perspektivische Ansicht eines weiteren Ausführungsbeispiels des erfindungsgemäßen Stoßfängers,
Fig. 10 eine Draufsicht auf den in Fig. 9 dargestellten Stoßfänger in vergrößertem Maßstab,
Fig. 11 eine perspektivische Ansicht noch eines Ausführungsbeispiels des erfindungsgemäßen Stoßfängers und
Fig. 12 eine Draufsicht auf den in Fig. 11 dargestellten Stoßfänger in vergrößertem Maßstab.

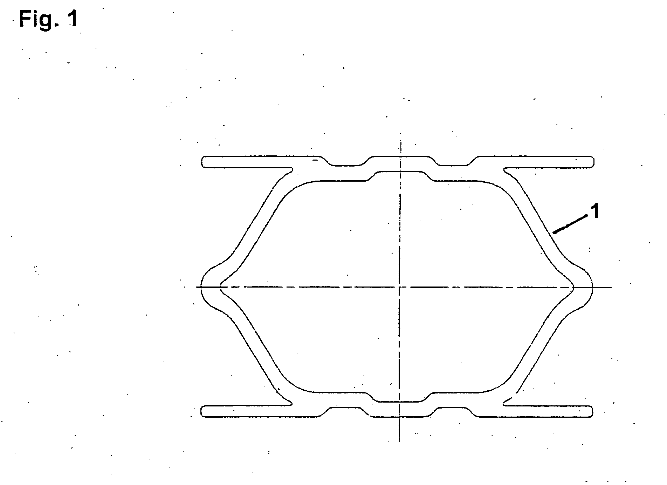

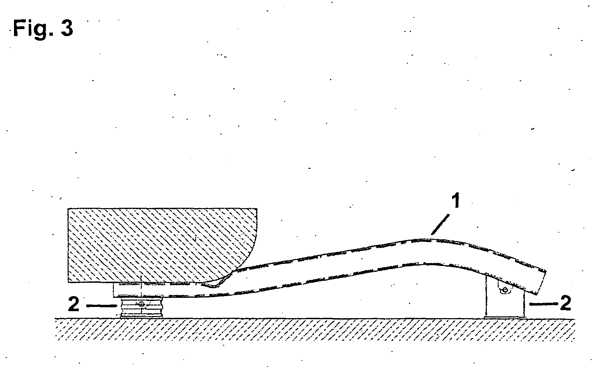

In Fig. 1 ist in einer Querschnittsansicht ein Stoßfängerträger für einen Stoßfänger eines Kraftfahrzeuges dargestellt, der aus einem Hohlprofilteil mit quer zum Kraftfahrzeug verlaufender Profillängsachse besteht. Der Stoßfängerträger 1 ist über energieabsorbierende Bauelemente 2 am Rahmen des Kraftfahrzeuges angeordnet, wie es in Fig. 3 dargestellt ist.

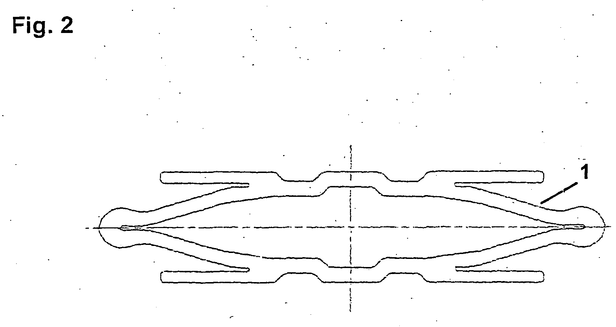

Fig. 1 zeigt die Querschnittsform des Stoßfängerträgers 1 im unbelasteten Zustand und Fig. 2 zeigt die Querschnittsform des Stoßfängerträgers 1 nach dem Anliegen eines Stoßes, d. h. im belasteten oder verformten Zustand. Die Stoßrichtung ist dabei in der Zeichnung von oben nach unten.

Wie es in Fig. 2 dargestellt ist, wird beim Anliegen eines Stoßes die Querschnittsform des Stoßfängerträgers verformt derart, dass sich die Fläche, an der der Stoß liegt, der Fläche nähert, die dem Fahrzeugrahmen am nächsten liegt.

Wie es in den Fig. 1 und 2 dargestellt ist, hat der Stoßfängerträger eine etwa sechseckige, insbesondere wabenförmige Querschnittsform. Die Querschnittsform ist derart gewählt, dass vorzugsweise jeweils zwei Kanten in der Stoßaufnahmeebene und der dazu parallelen gegenüberliegenden Ebene und zwei Kanten in einer dazwischen verlaufenden Mittelebene liegen.

Die Höhe des Stoßfängerträgers, d. h. seine Abmessung in Fig. 1 in Querrichtung zwischen den beiden Außenkanten in der Mittelebene ist vorzugsweise ≥ 70 mm.

Bei dem in Fig. 3 dargestellten Ausführungsbeispiel ist der Stoßfängerträger an seinen beiden Seiten in Richtung auf das Fahrzeug abgewinkelt oder abgebogen, wobei die Abwinklung oder Abbiegung an einer Stelle innen im Abstand von den energieaufnehmenden Bauelementen 2 beginnt.

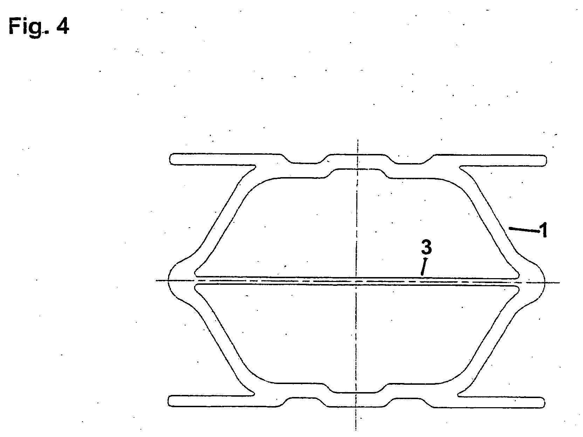

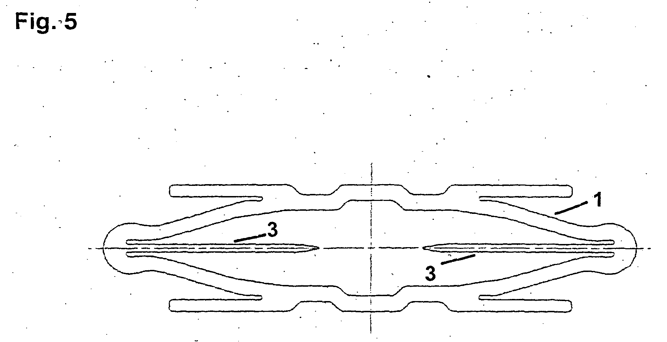

Wie es in den Fig. 4 und 5 dargestellt ist, ist bei dem in Fig. 3 dargestellten Ausführungsbeispiel im Inneren des Stoßfängerträgers und zwar in seiner Mittelebene ein Zugband 3 vorgesehen. Diese Ausbildung eignet sich insbesondere für den Fall, dass die in Fig. 1 dargestellte Ausbildung die zur Stoßaufnahme und Energieabsorption notwendigen Kräfte nicht liefern kann.

Bei einem Aufprall in der in Fig. 3 dargestellten Weise auf ein Hindernis wird durch die gebogene Geometrie des Stoßfängerträgers 1, der der Außengeometrie des Fahrzeuges folgt, der Stoßfängerträger 1 durch das Hindernis zuerst mehr in der Mitte berührt, woraufhin die Berührungsfläche sich bei einer entsprechenden Verformung des Stoßfängerträgers 1 in Längsrichtung des Kraftfahrzeuges zu beiden Seiten nach außen erweitert. Wie es in Fig. 5 dargestellt ist, reißt dabei das Zugband 3 auf, so dass der Stoßfängerträger 1 Stück für Stück in einen anderen Verformungszustand kommt und reißverschlussartig von innen nach außen aufreißt. Das kann beispielsweise durch eine durchlaufende Kerbe im Zugband 3 verstärkt werden, die beim Strangpressen des Hohlprofilteils des Stoßfängerträgers 1 vorgesehen wird.

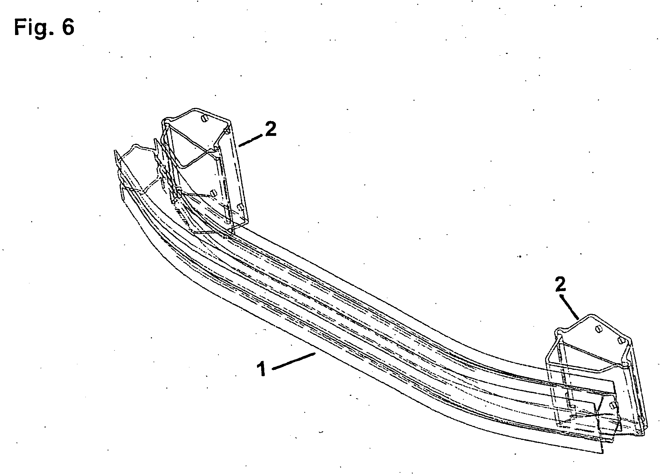

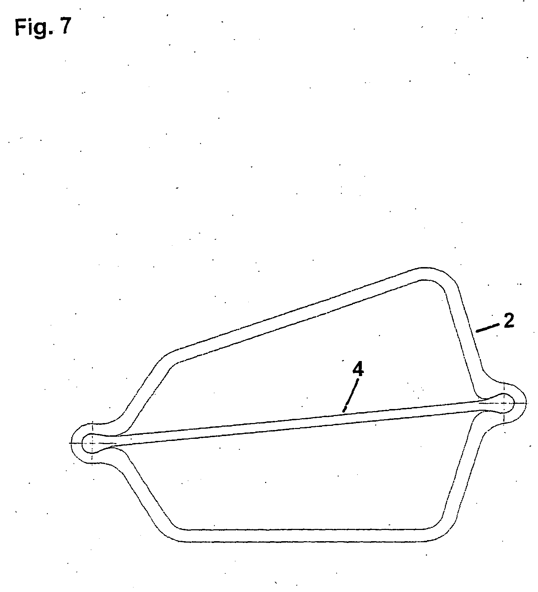

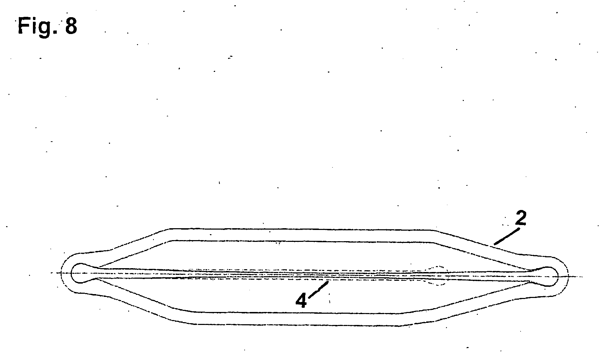

Fig. 6 zeigt ein Ausführungsbeispiel des erfindungsgemäßen Stoßfängers mit einem Stoßfängerträger 1 und energieabsorbierenden Bauelementen 2, die im Querschnitt gleichfalls sechseckig oder wabenförmig mit einem in der Mittelebene liegenden Zugband 4 ausgebildet sind. Fig. 7 zeigt ein derartiges energieabsorbierendes Bauelement 2 im unbelasteten Zustand und Fig. 8 zeigt dasselbe energieabsorbierende Bauelement 2 im belasteten Zustand mit gestrecktem Zugband 4.

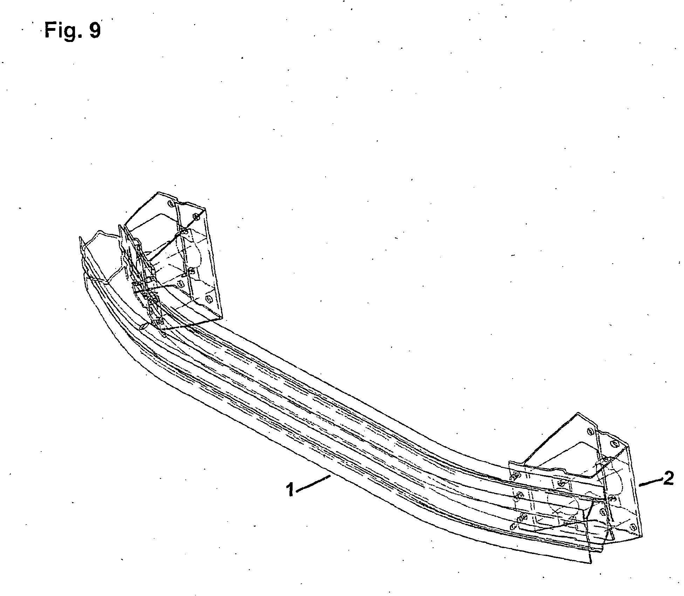

Fig. 9 zeigt ein Ausführungsbeispiel des erfindungsgemäßen Stoßfängers mit einem Stoßfängerträger 1 und energieabsorbierenden Bauelementen 2, die in Form eines Aluminiumschaumkörpers 5 ausgebildet sind, der in einem Gehäuse 6 angeordnet ist.

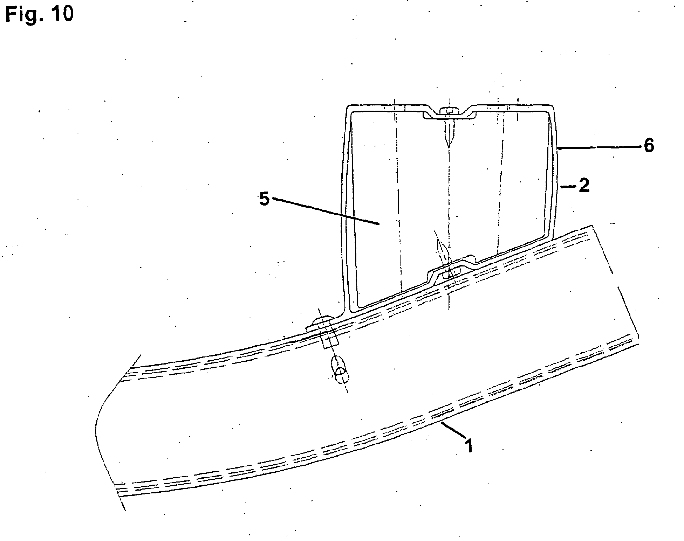

Fig. 10 zeigt im Einzelnen, dass das Gehäuse 6 mit dem Stoßfängerträger 1 verschraubt ist. Verschraubungen sind auch zwischen dem Gehäuse 6 und dem Aluminiumschaumkörper 5 vorgesehen.

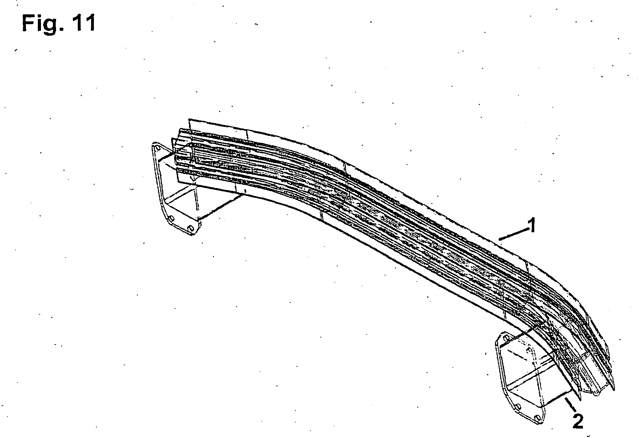

Fig. 11 zeigt noch ein Ausführungsbeispiel des erfindungsgemäßen Stoßfängers mit einem Stoßfängerträger 1 und energieabsorbierenden Bauelementen 2, die bei diesem Ausführungsbeispiel als Rechteckprofile ausgebildet sind, die über Faltenbeulen Energie aufnehmen.

Bei diesem Ausführungsbeispiel kann der Stoßfängerträger 1 mit dem Rechteckprofil des energieaufnehmenden Bauelementes 2 verschweißt sein, was den Vorteil bietet, dass der Stoßfänger eine steife Baugruppe ohne Setzbewegungen wie bei Schraublösungen darstellt und dadurch zusätzlich zur Gesamtfahrzeugsteifigkeit beitragen kann. Die Verwindung der Längsträger des Kraftfahrzeuges beim Auffahren auf eine Bordsteinkante ist dann geringer. Voraussetzung hierfür ist aber dass die Toleranzen des Fahrzeugrohbaus klein sind, da sonst beim Verschrauben der Fahrzeugrohbau verzogen wird.

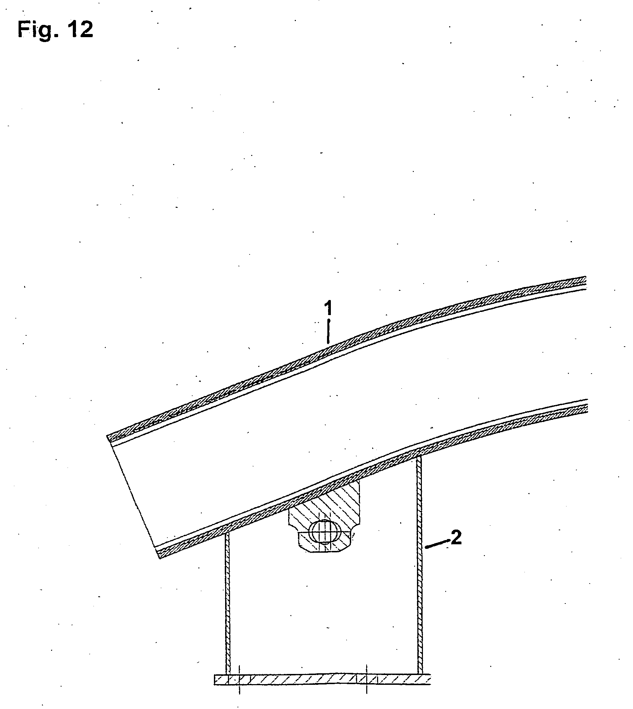

Der Stoßfängerträger kann aber mit dem Rechteckprofil auch durch eine vertikale Schraube verbunden sein, wie es in Fig. 12 dargestellt ist. Der Vorteil dieser Ausbildung besteht darin, dass der Stoßfänger größere Rohbautoleranzen ausgleichen kann und eine Einzelmontage und -demontage möglich sind.

Vorzugsweise sind bei diesem Ausführungsbeispiel die Rechteckprofile unter einem Winkel schräg nach außen zur Längsachse des Fahrzeugs angebracht. Die bei einer plastischen Verformung des Stoßfängerträgers auftretende Verkürzung in Querrichtung führt dann zu einer Parallelstellung der Rechteckprofile zur Fahrzeuglängsachse.

## Patentansprüche

1. Stoßfänger für ein Kraftfahrzeug mit einem Stoßfängerträger (1) und energieabsorbierenden Bauelementen (2), die zwischen dem Stoßfängerträger (1) und dem Rahmen des Kraftfahrzeuges angebracht sind, **dadurch gekennzeichnet, dass** der Stoßfängerträger (1) aus einem Hohlprofilteil mit quer zum Kraftfahrzeug verlaufender Profillängsachse besteht, dessen Querschnittsform sich bei einem anliegenden Stoß verformt.

2. Stoßfänger nach Anspruch 1, **dadurch gekennzeichnet, dass** die Querschnittsform des Hohlprofilteils des Stoßfängerträgers (1) sechseckig ist.

3. Stoßfänger nach Anspruch 2, **dadurch gekennzeichnet, dass** die Querschnittsform des Hohlprofilteils des Stoßfängerträgers (1) wabenförmig ist.

4. Stoßfänger nach einem der vorhergehenden Ansprüche, **gekennzeichnet durch** ein in Profillängsrichtung verlaufendes Zugband, das im Hohlprofilteil in einer Mittelebene senkrecht zur Stoßrichtung zwischen zwei gegenüberliegenden Kanten des Hohlprofilteils angeordnet ist.

5. Stoßfänger nach Anspruch 4, **dadurch gekennzeichnet, dass** das Zugband so ausgebildet ist, dass es bei einem am Stoßfänger liegenden Stoß in Längsrichtung reißt.

6. Stoßfänger nach einem der vorhergehenden Ansprüche, **dadurch gekennzeichnet, dass** der Stoßfängerträger (1) an beiden Außenseiten in Querrichtung zum Kraftfahrzeug hin abgebogen ist.

7. Stoßfänger nach Anspruch 6, **dadurch gekennzeichnet, dass** der Stoßfängerträger (1) ab einer Stelle abgebogen ist, die im Abstand innen von den energieabsorbierenden Bauelementen (2) liegt.

8. Stoßfänger nach einem der vorhergehenden Ansprüche, **dadurch gekennzeichnet, dass** die energieabsorbierenden Bauelemente (2) aus einem Aluminiumschaumkörper (5) bestehen, der in einem Gehäuse (6) angeordnet ist, das mit dem Stoßfängerträger (1) verbunden ist.

9. Stoßfänger nach einem der Ansprüche 1 bis 8, **dadurch gekennzeichnet, dass** die energieabsorbierenden Bauelemente (2) als im Querschnitt wabenförmige Profilteile ausgebildet sind.

10. Stoßfänger nach Anspruch 9, **dadurch gekennzeichnet, dass** die wabenförmigen energieabsorbierenden Bauelemente (2) im Inneren in ihrer Mittelebene ein Zugband (4) aufweisen, das zwischen den gegenüberliegenden Längskanten der Wabenform verläuft.

11. Stoßfänger nach einem der Ansprüche 1 bis 7, **dadurch gekennzeichnet, dass** die energieabsorbierenden Bauelemente (2) als Rechteckprofile ausgebildet sind.

12. Stoßfänger nach Anspruch 11, **dadurch gekennzeichnet, dass** die Rechteckprofile unter einem Winkel schräg nach außen zur Fahrzeuglängsachse angeordnet sind.

13. Stoßfänger nach Anspruch 11, **dadurch gekennzeichnet, dass** die Rechteckprofile mit dem Rahmen des Kraftfahrzeuges verschweißt sind.

14. Stoßfänger nach Anspruch 11, **dadurch gekennzeichnet, dass** die Rechteckprofile mit dem Rahmen des Kraftfahrzeuges verschraubt sind.
